# EUROPEAN PATENT APPLICATION

(11) **EP 4 674 756 A1**
(43) Date of publication of application: **07.01.2026**
(21) Application number: 24461591.0
(22) Date of filing: 05.07.2024
(51) Int. Cl.: B64D 11/06, B60N 2/841, B60N 2/844, B60N 2/847, B60N 2/885

(54) **SEAT HEADREST**

(71) Applicant: B/E Aerospace, Inc., Winston Salem, NC 27105 (US)
(72) Inventor: KALISZCZYK, Piotr Krzysztof, 51-317 Wroclaw (PL); CHODYNIECKI, Marcin Adam, 51-317 Wroc aw (PL); KO ODZIEJCZAK, Marcin Szymon, 51-317 Wroc aw (PL)
(74) Representative: Dehns

(57) **Abstract**

A seat headrest comprising: a headrest back panel (13) defined by a frame (11); a first side flap (14a) hingedly attached to a first end (13a) of the back panel; a second side flap (14b) hingedly attached to a second end (13b) of the back panel, opposite the first end; a locking and release mechanism (20a, 20b) provided at each of the hinge (15a) between the back panel and the first side flap and the hinge (15b) between the back panel and the second side flap, each locking and release mechanism comprising a first and second engaging parts (221, 222) biased by a spring (224) into locking engagement to lock the side flaps (14a, 14b) in a first hinged position relative to the back panel, and a torsion spring (25) to bias the respective side flaps (14a, 14b) to a second hinged position relative to the back panel, and each locking and release mechanism further comprising a push button (223) operable by a user to push the first and second engaging parts out of engagement causing the side flaps to move to the second hinge position under the force of the torsion spring (25).

## Description

### TECHNICAL FIELD

The present disclosure relates to a headrest for a seat such as, but not exclusively, for a seat in a vehicle or aircraft or any other seat where additional space and/or improved access to an area around the seat may be required.

### BACKGROUND

Seats, particularly in vehicles or in other environments where a user is seated while performing tasks, such as a pilot seat in an aircraft or a helicopter pilot seat, are often provided with a head rest portion extending from the seat back to support the user's head while seated for increased safety and comfort. Some headrests are formed integrally with the seat back. Others may be mounted permanently or removably to the seat and may be adjustable in height or angle to accommodate users of different sizes.

Whilst such headrests are desirable in terms of comfort and safety, there may be situations where the headrest obstructs the user's access to an area behind the seat. In a helicopter, for example, there is often a shelf or storage area behind a seat, or, in aircraft or other environments, the user may need to access controls, lights, accessories or other things from the area behind the seat without actually moving to the area behind the seat. Because of the task that the user is performing, or because of space constraints or for other reasons, the user may need to access the area behind the seat by just reaching back behind the seat from a seated position or from a position at the front of the seat. The headrest may, however, obstruct the access to the area behind the seat.

Further, seats can be installed in different configurations according to desired use. In any given vehicle, aircraft, it may be desired to arrange the seats to be front-facing, aft-facing and/or side-facing. Whilst, in front and aft facing seat arrangements a headrest providing cushioning only behind the head may offer sufficient protection to a passenger even in the case of impact (likely to be in a forward/aftward direction), headrests in a side-facing configuration typically require side panels or flaps for additional protection to the side of the passenger head. Even for front and aft facing arrangements, headrests with side flaps may be preferred. Such side flaps, however, take up space, and, in some cases, obstruct vision and, depending on the seat configurations and uses, may not always be desired. Whilst it is possible to provide a range of headrests to be mounted to seats according to their configuration, this is expensive and also requires additional assembly time and storage space etc. and it is preferably to have a generic headrest for all seats regardless of their configuration.

There is a need for a headrest design that meets these needs.

### SUMMARY

The present disclosure provides a folding headrest assembly with a mechanism for folding/unfolding side flaps of the headrest relative to the back panel of the headrest.

According to the disclosure, there is provided a seat headrest comprising: a headrest back panel defined by a frame; a first side flap hingedly attached to a first end of the back panel; a second side flap hingedly attached to a second end of the back panel, opposite the first end; a locking and release mechanism provided at each of the hinge between the back panel and the first side flap and the hinge between the back panel and the second side flap, each locking and release mechanism comprising a first and second engaging parts biased by a spring into locking engagement to lock the side flaps in a first hinged position relative to the back panel, and a torsion spring to bias the respective side flaps to a second hinged position relative to the back panel, and each locking and release mechanism further comprising a push button operable by a user to push the first and second engaging parts out of engagement causing the side flaps to move to the second hinge position under the force of the torsion spring.

The first position may be a folded closed position in which the side flaps are folded across the back panel and the second position may be an open position in which the first and second side flaps extend outwards from the back panel, or vice versa.

In an embodiment, the first and second engaging parts and the push button form an upper part of the locking and release mechanism and the torsion spring forms a lower part of the locking and release mechanism.

In embodiments, the torsion spring is mounted about a pivot shaft extending along the hinge which defines an axis about which the side flap pivots relative to the back panel between the first and the second position. The pivot shaft may be fixed to the frame at a lower portion of the frame.

In embodiments, an end of the torsion spring is attached to the respective side flap and the other end may be mounted to the pivot shaft.

In embodiments, the first and second engaging parts have cooperating engagement features such as cooperating cam profiles.

In embodiments, one of the first and second engaging parts is attached to the push button via a shaft extending along the hinge and is moveable along the hinge relative to the other of the engaging parts when the button is pushed, and the other of the first and second engaging parts is fixed to the side flap.

One or more stops may be provided to define an extreme of movement of the side flap relative to the back panel.

Also provided is a seat to which such a headrest is mounted e.g. a helicopter seat.

### BRIEF DESCRIPTION

Figure 1 is an isometric view of a headrest according to this disclosure.
Figure 2 shows a locking/release mechanism of headrest according to the disclosure.
Figure 3 shows a lower part of a locking/release mechanism such as shown in Fig. 2.
Figure 4 shows an upper part of a locking/release mechanism such as shown in Fig. 2.

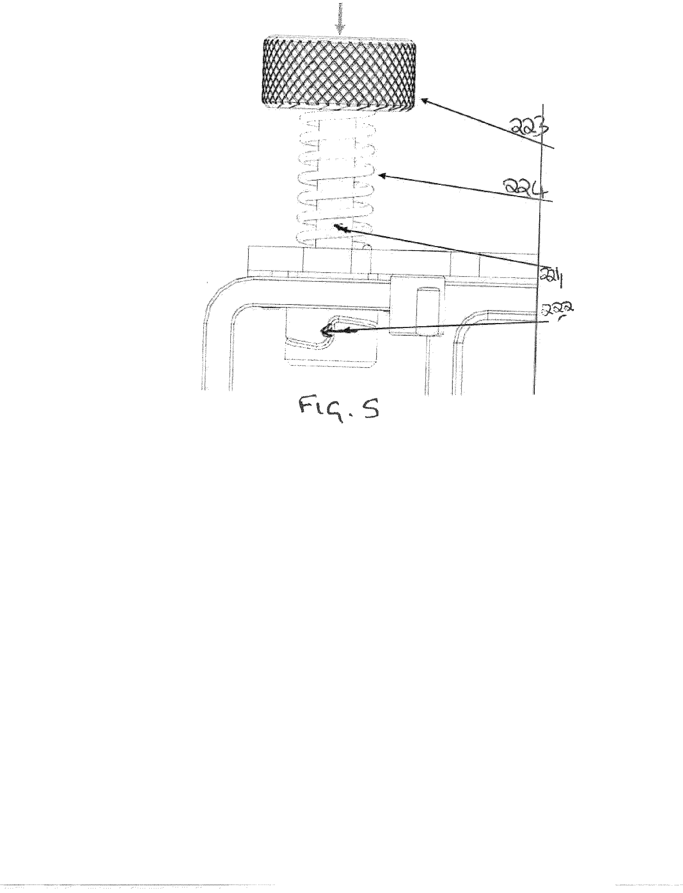

Figure 5 shows the upper part of the mechanism of Fig. 4 in more detail.
Figures 6A, 6B and 6C illustrate the operation of the mechanism shown in the previous figures.
Figures 7A, 7B and 7C are also provided to illustrate the operation of the mechanism.
Figures 8A and 8B provide further details of the operation of the mechanism

### DETAILED DESCRIPTION.

Examples of the headrest according to the disclosure will now be described with reference to the drawings. It should be noted that these are examples only and that variations are possible within the scope of the claims.

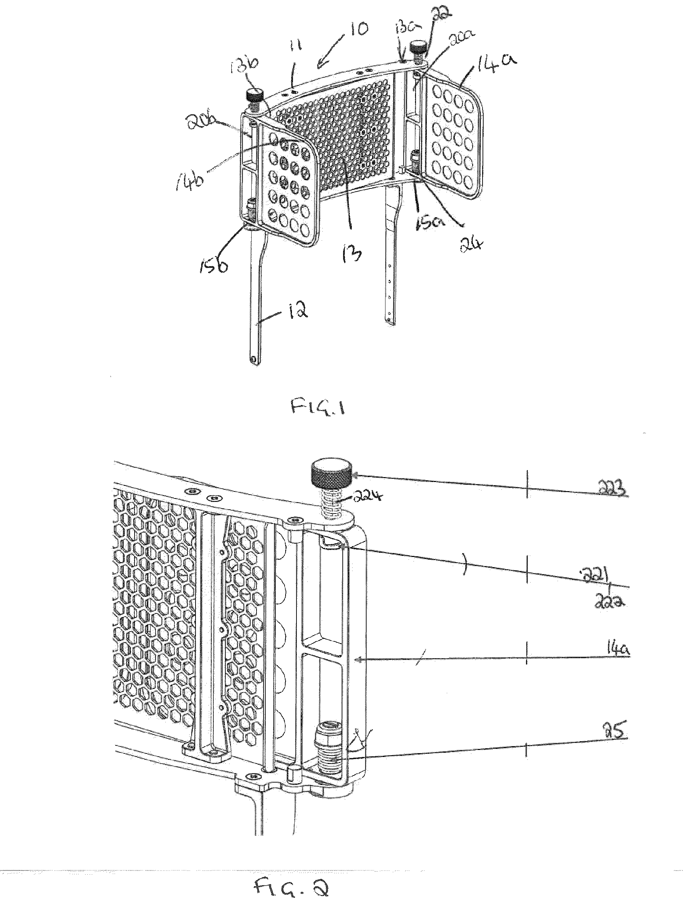

Figure 1 shows an example of a foldable headrest 10 according to the disclosure. The headrest is configured to be attached to the backrest of a seat, for example, the type of seat that may be fitted in a helicopter or other aircraft or vehicle, but the headrest can be used with any type of seat in any environment. When mounted to the seat, the headrest is positioned to provided support for the back of a user's head when they are seated in the seat. Typically, headrests are formed either integrally with the seat back or are a separate part that can be fitted to the top of the seat back e.g. by insertion of legs 12 extending from the headrest into slots or holes in the seatback dimensioned to receive the legs. A headrest typically has a frame to define the shape and structure of the headrest and some form of cushioning or padding over or around the frame to provide comfort. Similar to typical headrests, the headrest of this disclosure has a frame 11 around which cushioning of some sort would be typically be provided. To simplify understanding of the headrest and its locking/release mechanism, the cushioning has been omitted in the drawings, as it is not relevant to the solution provided here.

As mentioned above, for additional user comfort or protection, a headrest may also be provided with two side flaps 14a, 14b each at a respective end 13a, 13b of a back panel 13 against which the passenger's head can rest when seated.

To allow the headrest to be used in a variety of different seat configurations with or without side flap protection for the passenger, the side flaps of the headrest of this disclosure are foldable relative to the back panel as will be described further below.

The headrest includes a locking and release mechanism 20a, 20b, as will be described further below, which locks the side flaps 14a, 14b in a first, locked, position relative to the back panel and is actuable by a user to release the side flaps from the first position and move the side flaps to a second position.

The side flaps 14a, 14b are attached to the ends 13a, 13b of the back panel 13 by a respective hinge 15a, 15b which comprises the locking and release mechanism and about which the side flaps 14a, 14b pivot relative to the back panel 13 between the first position and the second position.

In the example shown and described, the first position is the folded closed position - i.e. where the side flap is folded across the back panel and the second position is the flap open position where the flap extends out from the side of the back panel to provide side protection for the passenger. It is envisaged that in other examples, the first position may be the open position.

The locking and release mechanism 20a, 20b comprises an upper part 22 and a lower part 24.

The lower part 24 comprises a torsion spring 25 which is fastened under tension between the side flap 14a and the back panel 13 to bias the side flap to the second position.

The upper part 22 comprises first and second engaging parts 221, 222 and a push button 223, biased by a spring 224 and connected to one of the first and second engaging parts 221, 222 such that when the button is pushed, by a user, against the bias of the spring 224, the one of the first and second engaging parts is moved out of engagement with the other of the first and second engaging parts. When the flap is in the first position, the first and second engaging parts are engaged and the flap is locked in the first position. When the button is actuated to disengage the first and second engaging parts, the lock is released and the side flap moves, pivoting about the hinge, from the first position to the second position due to the bias of the torsion spring 25.

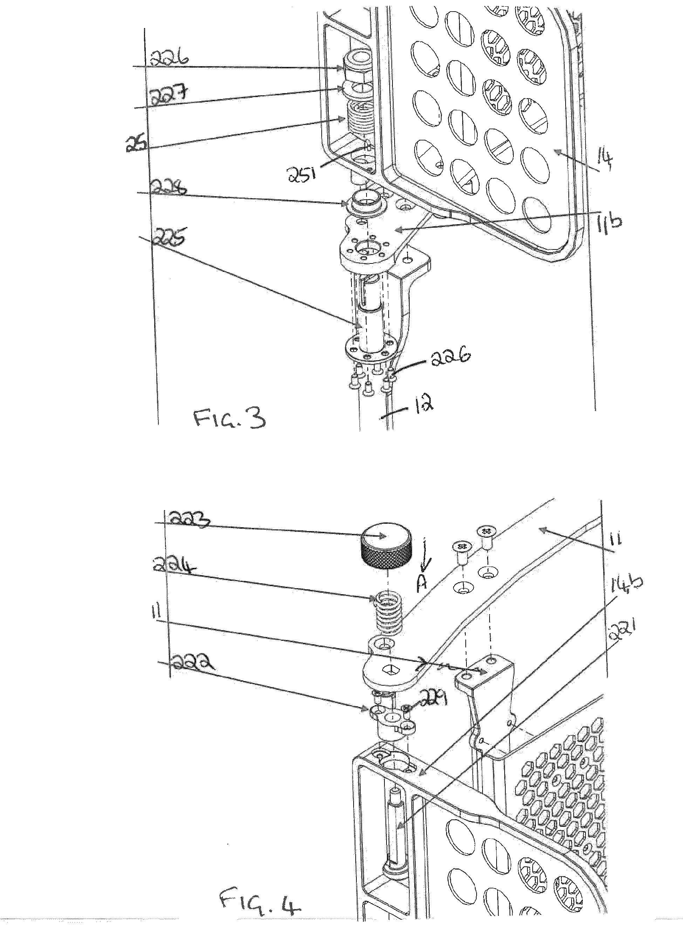

An example of the structure of the lower part 22 of the locking and release mechanism is shown in more detail, in the exploded view of Fig. 3. This shows the locking and release mechanism for one of the flaps 14b, but the locking and release mechanism will be the same for both flaps, except that the flaps will rotate about the hinge in opposite directions to both fold inwards relative to the back panel 13.

As seen in Fig. 3, the side flap 14b is attached to the headrest frame 11 along the hinge line to be pivotal relative to the back panel 13. The lower part 22 of the locking and release mechanism includes a shaft 225 extending along the hinge and about which the flap rotates. The shaft 225 may be fixed to the frame 11 of the headrest e.g. by screws or bolts or pins or other fasteners 226. The torsion spring 25 is mounted about the shaft and has an end 251 attached to the side flap 14b. This end 251 may be fit into a hole in the side flap or attached in some other way. The other end of the torsion spring is fixed to the shaft 225 e.g. by being fit into a groove or slot or hole in the shaft or by other attachment means. The lower part 22 may also include parts to secure the torsion spring in place relative to the shaft and to aid rotation of the spring. For example, a nut 226 and a washer 227 may be mounted at one end of the torsion spring and fasten to the shaft 225 that extends through the torsion spring and a bushing 228 may be provided at the other end of the torsion spring where it sits against the frame. These features are optional.

The upper part 24 of the locking and release mechanism is shown in more detail in the exploded view of Fig. 4.

As mentioned above, this part of the locking and release mechanism is also provided at the hinge between the side flap and the back panel, and comprises a push button that extends from the frame 11 at the top of the headrest for actuation by a user. The push button is mounted to a first engaging part 221. In this example, the first engaging part 221 is in the form of a cam shaft which extends along the hinge and has a first end attached to the button and a second end defining an engagement feature such as a cam profile or a detent or some other form that can engage with an opposing engagement feature of the second engaging part 222 to lock the engaging features against relative rotation about the hinge. The first engaging part may be attached to the button by a threaded engagement or in any other manner of attachment or engagement. The second engaging part 222 is attached to the frame 11 e.g. by fasteners such as screws 229. The push button 223 is biased relative to the frame - i.e. biased away from the frame 11 by a spring e.g. compression spring 224 between the frame and the button.

In the example shown, the first engaging feature 221, having a shaft, extends through the second engaging feature 222 and through the spring 224 and attaches to the push button 223. In the default state, the spring biases the button away from the frame and correspondingly biases the engagement feature of the first engaging part 221 into engagement with the mating engagement feature on the second engaging part. This will be described further below when describing the operation of the assembly. In this position, the flap is locked against rotational movement relative to the back panel 13.

To release the lock, the user presses on the button 223 in the downward direction A against the bias of the spring 224 corresponding moving the first engaging part 221 in direction A relative to the fixed second engaging part 222 and, so, disengaging the engagement features to thereby allow rotational movement of the flap relative to the back panel.

Whilst the engagement features are shown as engaging cam profiles, other features such as detents or various mating shapes or features may be used.

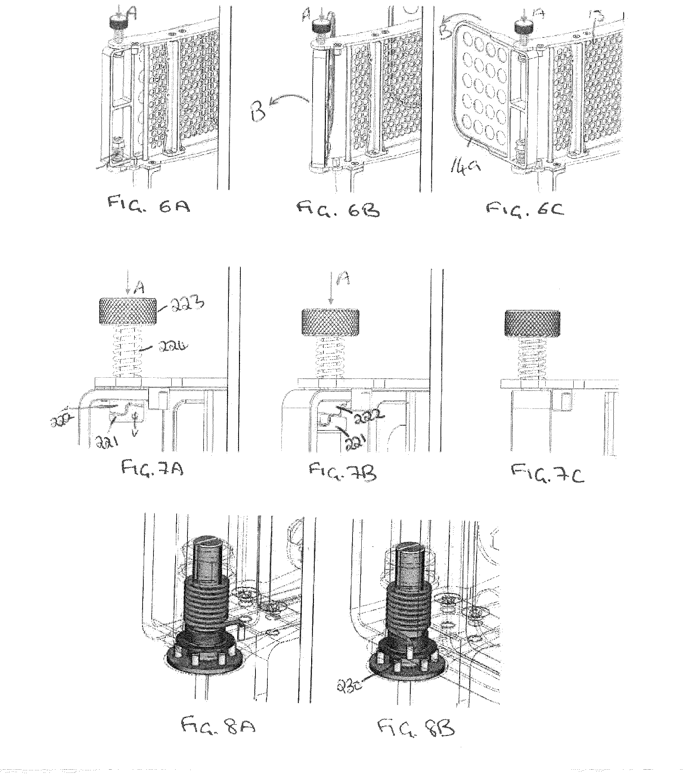

Operation of the foldable headrest assembly will be described in more detail with reference to the examples shown in Figs. 6A - 6C, 7A to 7C, 8A and 8B. where Figs. 6A to 6C show the entire hinge and locking and release mechanism, Figs. 7A to 7C show the upper part and Figs. 8A and 8B show the lower part.

Figs. 6A, 7A and 8A show the respective parts when the side flaps 14a, 14b are in the folded (first in this example) position. In this example, this is the default position. The push button is not pressed and is biased away from the frame by the spring 224 which, as best seen in Fig. 7A causes the first engaging part 221 to engage with the second engaging part 222 (here by interlocking cams). Because these parts are locked together against relative rotational movement. The flap is not able to rotate relative to the back panel 13 and is held in its folded, closed state along the back panel 13 (here, on the reverse side of that panel - being the side opposite to where the user's head would rest). The engagement of the engagement features holds the flap against rotation holding against the force of the torsion spring 25 which is set to bias the flap to the open, second position and so the tension spring remains under tension (as in Fig. 8A).

To unfold or open out the side flaps 14a, 14b, seen in Fig. 6B a user presses the push button 223 moving it against the force of the spring 224 in direction A. This pushes the first engaging part 221 away from the second engaging part 222 in direction A and so releases the locking engagement between those parts (best seen in Fig. 7B). In this state, the torsion spring 25 is then free to release and rotate the connected side flap 14a, 14b to rotate under the torsion spring force outwards, away from the back panel 13 (arrow B) until the side flaps reach their open position (Figs. 6C, 7C and 8B).

One or more stops 230 may be provided at extreme positions - e.g. at the extreme open position of the flaps 14a, 14b to prevent further rotation beyond that point.

To close the flaps 14a, 14b again, the user can merely move the flaps manually back to the first position, against the force of the torsion spring 25, by pushing against the flaps (in a direction opposite to B). Once the flaps reached the closed position, the engaging parts will engage again to lock the flaps until the button is pressed again.

The locking and release mechanism 20a, 20b allows the flap to be easily opened and closed for different seat arrangements and configurations.

The headset design described herein allows a user to easily, and without special tools, fold the headrest side flaps. The headrest can be easily mounted to a seat and is simple to assemble and operate. The various parts can be formed of simple, lightweight parts to keep costs and weight to a minimum.

## Claims

1. A seat headrest comprising:
a headrest back panel (13) defined by a frame (11);
a first side flap (14a) hingedly attached to a first end (13a) of the back panel;
a second side flap (14b) hingedly attached to a second end (13b) of the back panel, opposite the first end;
a locking and release mechanism (20a, 20b) provided at each of the hinge (15a) between the back panel and the first side flap and the hinge (15b) between the back panel and the second side flap, each locking and release mechanism comprising a first and second engaging parts (221, 222) biased by a spring (224) into locking engagement to lock the side flaps (14a, 14b) in a first hinged position relative to the back panel, and a torsion spring (25) to bias the respective side flaps (14a, 14b) to a second hinged position relative to the back panel, and each locking and release mechanism further comprising a push button (223) operable by a user to push the first and
second engaging parts out of engagement causing the side flaps to move to the second hinge position under the force of the torsion spring (25).

2. The headrest of claim 1, wherein the first position is a folded closed position in which the side flaps are folded across the back panel and the second position is an open position in which the first and second side flaps extend outwards from the back panel.

3. The headrest of claim 1 or 2, wherein the first and second engaging parts (221, 222) and the push button form an upper part (22) of the locking and release mechanism and the torsion spring forms a lower part (24) of the locking and release mechanism.

4. The headrest of any preceding claim, wherein the torsion spring (25) is mounted about a pivot shaft (225) extending along the hinge (15a, 15b) which defines an axis about which the side flap pivots relative to the back panel between the first and the second position.

5. The headrest of claim 4, wherein the pivot shaft (225) is fixed to the frame (11) at a lower portion of the frame (11).

6. The headrest of any preceding claim, wherein an end (251) of the torsion spring (25) is attached to the respective side flap.

7. The headrest of any preceding claim, wherein the first and second engaging parts (221, 222) have cooperating engagement features.

8. The headrest of claim 7, wherein the cooperating features are cooperating cam profiles.

9. The headrest of any preceding claim, wherein one of the first and second engaging parts (221, 222) is attached to the push button (223) via a shaft extending along the hinge and is moveable along the hinge relative to the other of the engaging parts when the button is pushed, and the other of the first and second engaging parts is fixed to the side flap (14a, 14b).

10. The headrest of any preceding claim, further comprising one or more stops (230) to define an extreme of movement of the side flap relative to the back panel.

11. The headrest of any preceding claim, further comprising cushioning fitted over the frame (11).

12. The headrest of any preceding claim, further comprising legs extending from the headrest for attachment to a seat back, in use.

13. A seat having a seat base (2) and a seat back (3) and a headrest as claimed in any preceding claim mounted to a top of the seat back.

14. The seat of claim 13, wherein the headrest is removably mounted to the top of the seat back.
